# EUROPÄISCHE PATENTSCHRIFT

(11) **EP 2 908 139 B1**
(45) Veröffentlichungstag und Bekanntmachung des Hinweises auf die Patenterteilung: **01.04.2020**
(21) Anmeldenummer: 15153353.6
(22) Anmeldetag: 30.01.2015
(51) Int. Cl.: G01N 35/04, B01L 9/06

(54) **TRANSPORTVORRICHTUNG, PROBENVERTEILUNGSSYSTEM UND LABORAUTOMATISIERUNGSSYSTEM**
TRANSPORT DEVICE, SAMPLE DISTRIBUTION SYSTEM AND LABORATORY AUTOMATION SYSTEM
DISPOSITIF DE TRANSPORT, SYSTÈME DE DISTRIBUTION D'ÉCHANTILLONS ET SYSTÈME D'AUTOMATISATION DE LABORATOIRE

(30) Priorität: 17.02.2014 DE 102014202838
(43) Veröffentlichungstag der Anmeldung: 19.08.2015
(73) Patentinhaber: Roche Diagnostics GmbH, 68305 Mannheim (DE); F. Hoffmann-La Roche AG, 4070 Basel (CH)
(72) Erfinder: Bühr, Fritz, 71737 Kirchberg/Murr (DE)
(74) Vertreter: Patentanwälte Ruff, Wilhelm, Beier, Dauster & Partner mbB

(56) Entgegenhaltungen:
- EP-A1- 2 502 675
- EP-A1- 2 589 966
- EP-A2- 0 916 406
- US-A- 4 150 666
- US-A1- 2006 000 296

## Beschreibung

### Anwendungsgebiet und Stand der Technik

Die Erfindung betrifft eine Transportvorrichtung zur Aufnahme und Fixierung eines Probenbehälters und zum Transport des Probenbehälters, ein Probenverteilungssystem und ein Laborautomatisieru ngssystem.

Probenbehälter sind typischerweise längliche, einseitig offene Gefäße aus meist transparentem Glas oder Kunststoff, die zur Aufbewahrung und zum Transport von meist flüssigen Proben verwendet werden. Bei derartigen Proben handelt es sich beispielsweise um Blutproben.

Bei Laborautomatisierungssystemen ist es häufig notwendig, Proben in Probenbehältern zu einer Mehrzahl von unterschiedlichen Stationen des Laborautomatisierungssystems zu transportieren.

Die WO 2013/064656 A1 zeigt ein Probenverteilungssystem mit einer Anzahl von Transportvorrichtungen bzw. Probenträgern, die jeweils ein magnetisches Element aufweisen. Die Probenträger sind dazu ausgebildet, einen Probenbehälter, beispielsweise in Form eines Probenröhrchens, aufzunehmen. In den Probenbehältern sind zu analysierende Proben, beispielsweise Blutproben, enthalten. Das Probenverteilungssystem weist weiter eine Transporteinrichtung mit einer Transportfläche auf, die dazu ausgebildet ist, die Probenträger zu tragen. Das Probenverteilungssystem weist weiter eine Anzahl von elektromagnetischen Aktuatoren auf, die stationär unter der Transportfläche angeordnet sind. Die elektromagnetischen Aktuatoren sind dazu ausgebildet, einen jeweiligen Probenträger durch Ausüben einer magnetischen Kraft auf der Transportfläche zu bewegen. Eine Steuerungseinrichtung ist dazu ausgebildet, die elektromagnetischen Aktuatoren derart anzusteuern, dass sich ein jeweiliger Probenträger auf der Transportfläche entlang einer vorgebbaren Bewegungsbahn bewegt. Das Probenverteilungssystem dient zum Transportieren der Probenbehälter zwischen unterschiedlichen Stationen eines Laborautomatisierungssystems, wobei eine Bewegungsbahn typisch zwischen den unterschiedlichen Stationen verläuft.

Die EP 0 916 406 A2 zeigt einen Puck für Probenröhrchen mit einer Halteeinheit zur Fixierung der Probenröhrchen, die eine Anzahl von Federelementen aufweist, die dazu ausgebildet sind, die Probenröhrchen mit jeweils radial nach innen gerichteten Fixierkräften zu beaufschlagen.

Die EP 2 502 675 A1 zeigt einen Behälterhalter mit drehbar gelagerten Haltemitteln.

Die US 4,150,666 A zeigt einen Röhrchenhalter zur Aufnahme eines Blutprobenröhrchens mit einer Spannzange zur Fixierung des Blutprobenröhrchens.

### Aufgabe und Lösung

Es ist eine Aufgabe der Erfindung, eine Transportvorrichtung, ein Probenverteilungssystem und ein Laborautomatisierungssystem vorzusehen, die einfach handhabbar sind.

Dies wird erfindungsgemäß durch eine Transportvorrichtung nach Anspruch 1, ein Probenverteilungssystem nach Anspruch 6 und ein Laborautomatisierungssystem nach Anspruch 7 erreicht. Ausgestaltungen können beispielsweise den Unteransprüchen entnommen werden. Der Wortlaut sämtlicher Ansprüche wird durch ausdrückliche Inbezugnahme zum Inhalt der Beschreibung gemacht.

Die Erfindung betrifft eine Transportvorrichtung zur Aufnahme und Fixierung eines Probenbehälters aus einer vorgegebenen Menge von unterschiedlichen Probenbehältern. Die vorgegebene Menge von unterschiedlichen Probenbehältern kann beispielsweise durch eine Anzahl von Probenröhrchen unterschiedlichen Typs gebildet sein, wobei sich die unterschiedlichen Typen beispielsweise in einem Durchmesser des Probenröhrchens unterscheiden. Die Transportvorrichtung ist zur Aufnahme und Fixierung unterschiedlicher Probenbehälter ausgebildet, d.h. kann beispielsweise verschiedene Typen von Probenbehältern bzw. Probenröhrchen aufnehmen.

Die Transportvorrichtung kann weiter zum Transportieren des Probenbehälters zwischen präanalytischen, analytischen und/oder postanalytischen Stationen eines Laborautomatisierungssystems dienen. Die Transportvorrichtung kann beispielsweise ein Probenträger sein.

Eine präanalytische Station dient üblicherweise der Vorverarbeitung von Proben bzw. Probenbehältern.

Eine analytische Station kann beispielsweise dazu ausgebildet sein, eine Probe oder einen Teil der Probe und ein Reagenz zu verwenden, um ein messbares Signal zu erzeugen, auf Basis dessen bestimmbar ist, ob und gegebenenfalls in welcher Konzentration der Analyt vorhanden ist.

Eine postanalytische Station dient üblicherweise der Nachverarbeitung von Proben bzw. Probenbehältern.

Die präanalytischen, analytischen und postanalytischen Stationen können beispielsweise mindestens eine Station aus der Menge folgender Stationen aufweisen: eine Kappenentfernungsstation zum Entfernen von Kappen bzw. Verschlüssen auf Probenröhrchen, eine Kappenaufbringstation zum Aufbringen von Kappen bzw. Verschlüssen auf Probenröhrchen, eine Aliquotierstation zum Aliquotieren von Proben, eine Zentrifugierstation zum Zentrifugieren von Proben, eine Archivierstation zum Archivieren von Proben, eine Pipettierstation zum Pipettieren, eine Sortierstation zum Sortieren von Proben bzw. Probenröhrchen, eine Probenröhrchentypbestimmungsstation zum Bestimmen eines Typs eines Probenröhrchens und eine Probenqualitätsbestimmungsstation zum Bestimmen einer Probenqualität.

Die Transportvorrichtung weist mindestens ein magnetisch wirksames Element auf, beispielsweise in Form eines oder mehrerer Permanentmagnete und/oder in Form von ferromagnetischem Material. Das magnetische Element ist dazu ausgebildet, mit einem mittels mindestens eines elektromagnetischen Aktuators erzeugten Magnetfeld derart wechselzuwirken, dass eine Antriebskraft auf die Transportvorrichtung bzw. das magnetisch wirksame Element bewirkt wird.

Die Transportvorrichtung weist weiter eine Halteeinheit mit einem Durchsteckbereich auf, durch den der Probenbehälter in seiner Längsrichtung durchsteckbar ist, wobei die Halteeinheit derart ausgebildet ist, dass das Probenröhrchen im durchgesteckten Zustand im Bereich der Halteeinheit radial fixiert ist.

Die Transportvorrichtung weist weiter eine von der Halteeinheit beabstandete Aufnahmeeinheit auf, die dazu ausgebildet ist, ein unteres Ende eines durchgesteckten Probenröhrchens aufzunehmen und das untere Ende radial zu fixieren bzw. zu stabilisieren.

Eine erfindungsgemäße Transportvorrichtung erlaubt zum einen eine automatisierte Bewegung der Transportvorrichtung beispielsweise mittels einer Probenverteilungssystems, wie es in der WO 2013/064656 A1 beschrieben ist. Zum anderen ermöglicht die Trennung von Halteeinheit und Aufnahmeeinheit eine bessere Toleranz gegen Verkippungen des Probenbehälters beim Einbringen und Herausnehmen des Probenbehälters in die Transportvorrichtung, so dass eine bessere Automatisierung auch dieser Vorgänge möglich ist.

Probenbehälter bzw. Probenröhrchen sind typischerweise radialsymmetrisch bzw. achsensymmetrisch ausgebildet. Dies bedeutet, dass sie einen radialsymmetrischen bzw. achsensymmetrischen Querschnitt aufweisen, der sich üblicherweise lediglich entlang der Längsrichtung bzw. Längsachse des Probenröhrchens im Bereich eines Längsendes des Probenbehälters verkleinert. Die Längsrichtung ist typischerweise identisch mit bzw. parallel zur Symmetrieachse.

Typischerweise nimmt die Aufnahmeeinheit ein unteres Ende bzw. Längsende, d.h. den untersten Teil des Probenbehälters, auf. Mit anderen Worten trägt die Aufnahmeeinheit den Probenbehälter. Die Halteeinheit hält dagegen typischerweise einen weiter oben liegenden Bereich des Probenbehälters, wobei dieser Bereich insbesondere durch die Halteeinheit gegen seitliches Verkippen gesichert ist.

Die Aufnahmeeinheit bildet insbesondere auch einen Endanschlag beim Einbringen bzw. Durchstecken des Probenröhrchens durch die Halteeinheit in die Transportvorrichtung.

Die Aufnahmeeinheit kann eine Vertiefung in Form eines Konus zur Aufnahme des unteren Endes des Probenröhrchens aufweisen, so dass Probenröhrchen mit unterschiedlichen Durchmessern durchmesserunabhängig senkrecht in der Transportvorrichtung gehalten werden. Damit kann eine Abstützung und seitliche Fixierung des Probenröhrchens erreicht werden.

Die Vertiefung kann zumindest abschnittsweise nach unten, d.h. vom Ende weg, verjüngend ausgebildet sein. Die Vertiefung kann zumindest abschnittsweise oder auch vollständig konusförmig ausgebildet sein. Auf diese Wiese kann eine gute Passung an typische Formen von Probenbehältern erreicht werden.

Die Vertiefung kann mit der Form des unteren Endes eines Probenbehälters korrespondieren. Dies kann beispielsweise bedeuten, dass die Vertiefung komplementär zum Ende des Probenbehälters ausgebildet ist. Auf diese Weise wird eine besonders sichere Aufnahme erreicht.

Die Transportvorrichtung weist bevorzugt einen Gleitabschnitt mit kreisförmigem Querschnitt auf, auf dem die Transportvorrichtung bei Vorhandensein der Antriebskraft über einer Transportfläche gleiten kann, wobei der Permanentmagnet auf einer bzw. symmetrisch zu einer Achse angeordnet sein kann, die durch den Mittelpunkt des kreisförmigen Querschnitts verläuft und die senkrecht auf den Querschnitt steht.

Der Gleitabschnitt kann flächig ausgebildet sein. Der Querschnitt kann senkrecht zu einer Längsrichtung des Probenbehälters stehen, wenn sich dieser in der Transportvorrichtung befindet.

Der Gleitabschnitt liegt typischerweise parallel zur Transportfläche und weist eine ebene Unterseite auf, wodurch eine reibungsreduzierte Bewegung der Transportvorrichtung über die Transportfläche erzielbar ist. Eine mittige Anordnung des Permanentmagneten in der Transportvorrichtung kann die Ansteuerung und Bewegung der Transportvorrichtung mittels von außen angelegter Magnetfelder erleichtern.

Gemäß einer Ausführung weist die Transportvorrichtung ein Unterteil und ein Oberteil auf, wobei die Aufnahmeeinheit an bzw. in dem Unterteil ausgebildet ist und die Halteeinheit an dem bzw. in dem Oberteil ausgebildet ist. Das Unterteil und das Oberteil sind voneinander lösbar. Dies erleichtert beispielsweise die Herstellung der Transportvorrichtung, da Unterteil und Oberteil getrennt voneinander hergestellt werden können und auch entsprechend unterschiedliche, jeweils geeignete Verfahren und Werkstoffe angewendet bzw. verwendet werden können. Außerdem ist es möglich, nur eines der beiden Teile auszutauschen, sofern nur eines von beiden defekt sein sollte. Dies reduziert Unterhaltskosten.

Das Unterteil und das Oberteil können mittels eines Klickverschlusses miteinander verbunden und entsprechend voneinander lösbar sein.

Bei einer Ausführung mit einem Unterteil und einem Oberteil, wie eben beschrieben, ist der Gleitabschnitt bevorzugt Bestandteil des Unterteils. Damit kann der Gleitabschnitt auf der Transportfläche aufliegen.

Die Halteeinheit ist als Spannzange ausgebildet. Die Spannzange ermöglicht insbesondere das Ausüben eines definierten radialen Drucks bzw. einer radialen Kraftbeaufschlagung auf den Probenbehälter, der bzw. die einstellbar sein kann.

Die Spannzange weist eine Anzahl von kreisförmig angeordneten Spannelementen auf, wobei radial außerhalb der Spannelemente eine vertikal zwischen einer oberen Position und einer unteren Position verschiebbare Hülse angeordnet ist, wobei die Hülse die Spannelemente radial nach innen drückt, wenn sie sich in der oberen Position befindet. Es können genau sechs kreisförmig angeordnete Spannelemente vorgesehen sein.

Mittels der verschiebbaren Hülse kann die Transportvorrichtung mittels einer hierfür geeigneten, nicht zur Transportvorrichtung gehörenden Apparatur in definierter Weise beeinflusst werden, um zu bestimmen, ob die Spannzange eine radiale Haltekraft auf ein Probenröhrchen ausüben soll oder nicht. Beispielsweise kann die Hülse von einer externen Vorrichtung nach unten gedrückt werden, wenn die Spannzange keine radiale Kraft auf das Probenröhrchen ausüben soll. Ein solcher Zustand kann beispielsweise zum Einbringen und Herausnehmen von Probenröhrchen vorteilhaft sein. Des Weiteren kann die Hülse durch die externe Vorrichtung oder anderweitig wieder in die obere Position verbracht werden, um zu erreichen, dass das in der Transportvorrichtung aufgenommene Probenröhrchen durch die Spannzange radial gehalten wird. Ein solcher Zustand kann beispielsweise zum Verschieben und Lagern eines Probenröhrchens vorteilhaft sein.

Unterhalb der Hülse ist eine Feder angeordnet, die die Hülse auf die obere Position zu vorspannt. Somit ist die Hülse in der oberen Position, wenn sich die Transportvorrichtung nicht unter Einfluss einer externen Vorrichtung befindet, die die Hülse nach unten drückt. Somit wird im Normalfall das Probenröhrchen radial fixiert. Soll ein Probenröhrchen in die Transportvorrichtung eingeführt oder aus dieser entnommen werden, so genügt eine Vorrichtung, die die Hülse nach unten drückt, um das Probenröhrchen freizugeben. Nach Abschluss dieses Vorgangs wird die Hülse wieder losgelassen, so dass sie von der Feder wieder nach oben gedrückt wird und die Spannzange wieder ihre stabilisierende Wirkung auf das Probenröhrchen ausübt. Dies ermöglicht ein einfaches Beladen und Entladen der Transportvorrichtung.

Die Halteeinheit und die Aufnahmeeinheit können derart zueinander beabstandet sein, dass eine maximale Durchstecktiefe 2 cm beträgt. Die Durchstecktiefe kann auch als Einstecktiefe bezeichnet werden. Es handelt sich dabei insbesondere um diejenige Tiefe, um welche ein Probenröhrchen noch nach unten bewegt werden kann, wenn das Probenröhrchen durch die Halteeinheit gerade hindurchgesteckt wurde. Eine maximale Durchstecktiefe von 2 cm oder etwa 2 cm hat sich in der Praxis als vorteilhaft erwiesen.

Die Transportvorrichtung weist bevorzugt eine Höhe von insgesamt etwa 4 cm oder genau 4 cm auf. Dies hat sich für viele Anwendungen als vorteilhaft herausgestellt und erlaubt eine kompakte Bauform bei gleichzeitig ausreichender Stabilisierungswirkung für das Probenröhrchen.

Weiter bevorzugt entspricht die Höhe der Transportvorrichtung höchstens ihrem Durchmesser. Dies ermöglicht eine flache und gegen Verkippen stabile Ausführung.

Die Transportvorrichtung kann rotationssymmetrisch ausgeführt sein. Dies erlaubt eine einfache Herstellung und vermeidet ferner eine Vorzugsrichtung, so dass die Transportvorrichtung unter Verwendung von Magnetfeldern zweidimensional auf der Transportfläche bewegt werden kann, ohne dass auf eine momentane Orientierung der Transportvorrichtung Rücksicht genommen werden muss.

### Kurze Beschreibung der Zeichnungen

Die Erfindung wird nachfolgend unter Bezugnahme auf die Zeichnungen detailliert beschrieben. Hierbei zeigen schematisch:
- Fig. 1: ein erstes, nicht zur Erfindung gehörendes Ausführungsbeispiel einer Transportvorrichtung in einer perspektivischen Ansicht,
- Fig. 2: die Transportvorrichtung von Fig. 1 in einer seitlichen Schnittansicht,
- Fig. 3: ein zweites Ausführungsbeispiel einer erfindungsgemäßen Transportvorrichtung in einer perspektivischen Ansicht,
- Fig. 4: die Transportvorrichtung von Fig. 3 in einer seitlichen Schnittansicht in einem ersten Zustand,
- Fig. 5: die Transportvorrichtung von Fig. 3 in einer Schnittansicht in einem zweiten Zustand.

### Detaillierte Beschreibung der Ausführungsbeispiele

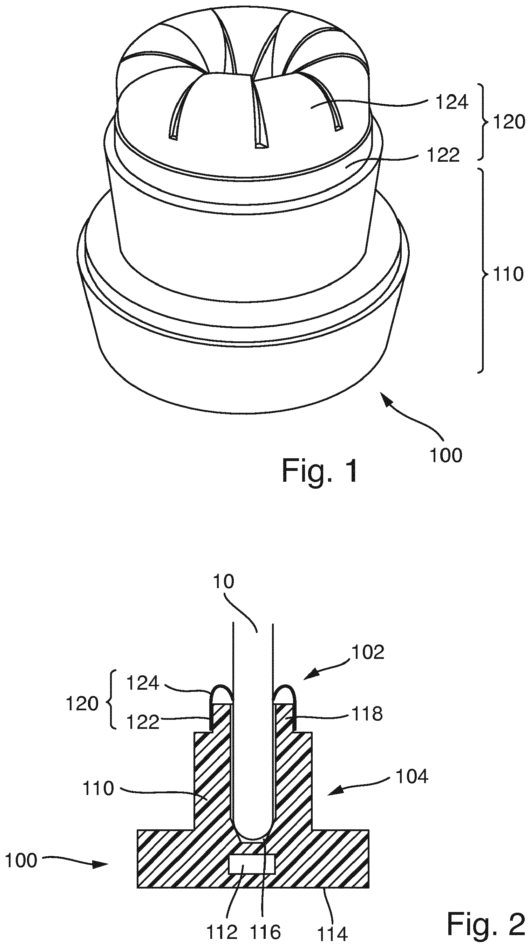

Fig. 1 zeigt ein erstes nicht zur Erfindung gehörendes Ausführungsbeispiel einer Transportvorrichtung 100 in einer perspektivischen Ansicht. Die Transportvorrichtung 100 weist ein Unterteil 110 und ein Oberteil 120 auf. Unterteil 110 und Oberteil 120 sind voneinander entfernbar. Das Oberteil 120 ist wiederum untergliedert in einen Ring 122 und insgesamt zehn Federelemente 124.

Die Details der Transportvorrichtung 100 werden nachfolgend mit Bezug auf Fig. 2 näher beschrieben.

Fig. 2 zeigt die Transportvorrichtung 100 von Fig. 1 in einer seitlichen Schnittansicht. Des Weiteren befindet sich ein Probenbehälter in Form eines Probenröhrchens 10 in der Transportvorrichtung 100, welches zum Halten und Transportieren in der Transportvorrichtung 100 aufgenommen ist.

Das Unterteil 110 weist einen Permanentmagneten 112 auf, welcher mittig in einem Gleitabschnitt 114 mit ebener Unterseite angeordnet ist. Der Gleitabschnitt 114 ist dazu ausgebildet, auf einer Transportfläche aufzuliegen. Mittels des Permanentmagneten 112 und des Gleitabschnitts 114 kann die Transportvorrichtung 100 samt des Probenröhrchens 10 über eine Transportfläche eins Probenverteilungssystems bewegt werden, wenn mittels des Probenverteilungssystem geeignete Magnetfelder erzeugt werden.

In dem Unterteil 110 ist ferner eine Vertiefung 116 ausgebildet, in welcher das untere Ende des Probenröhrchens 10 aufgenommen ist. Die Vertiefung 116 und das untere Ende des Probenröhrchens 10 sind dabei komplementär zueinander ausgebildet.

Das Unterteil 110 weist ferner an seinem oberen Ende einen Vorsprung 118 auf, über welchen der Ring 122 des Oberteils 120 gestülpt ist. Der Ring 122 wird dabei in Presspassung auf dem Vorsprung 118 gehalten. Dies ermöglicht eine zuverlässige Befestigung des Rings 122 und damit auch des Oberteils 120 an dem Unterteil 110, wobei gleichzeitig vorgesehen ist, dass das Oberteil 120 einfach von dem Unterteil 110 entfernt werden kann. Hierzu müssen lediglich nach oben gerichtete Kräfte auf das Oberteil 120 ausgeübt werden, welche die durch die Presspassung erzeugten Haltekräfte überwinden.

Die Federelemente 124 sind vorliegend in etwa als nach unten geöffnete Halbkreise ausgebildet. Dabei enden sie mit jeweils einem Ende an dem Ring 122, wohingegen sie mit dem anderen Ende gegen das Probenröhrchen 10 drücken. Damit üben sie eine nach innen gerichtete Fixierkraft auf das Probenröhrchen 10 aus. Dies verhindert ein Herausfallen oder Wackeln des Probenröhrchens 10, erlaubt jedoch gleichzeitig ein leichtes Einbringen und Entnehmen des Probenröhrchens 10 und bietet auch eine gewisse Toleranz, sollte das Probenröhrchen 10 beispielsweise mit seiner Oberseite an ein Hindernis anstoßen.

Das Unterteil 110 mit seiner konusförmigen Vertiefung 116 bildet eine Aufnahmeeinheit 104 für das Probenröhrchen 10. Das Oberteil 120 mit seinen Federelementen 124 bildet eine Halteeinheit 102 für das Probenröhrchen 10. Zusammen wirken die Halteeinheit 102 und die Aufnahmeeinheit 104 derart, dass das Probenröhrchen 10 zuverlässig in seiner Position in der Transportvorrichtung 100 gehalten wird und auf diese Weise einfach transportiert werden kann.

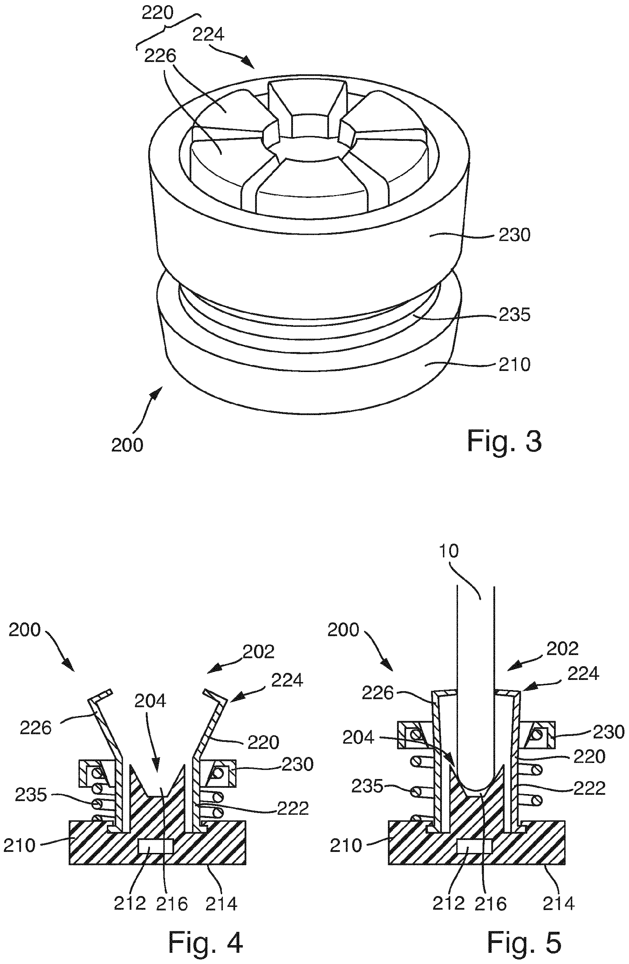

Fig. 3 zeigt ein zweites Ausführungsbeispiel einer Transportvorrichtung 200 in einer perspektivischen Ansicht. Die Transportvorrichtung 200 gemäß dem zweiten Ausführungsbeispiel weist ein Unterteil 210 und ein Oberteil 220 auf. Das Oberteil 220 weist eine Spannzange 224 mit insgesamt sechs Spannelementen 226 auf.

Radial außerhalb des Oberteils 220 befindet sich eine Hülse 230 mit einer darunter angeordneten Feder 235.

Die Details der Transportvorrichtung 200 werden nachfolgend mit Bezug auf die Fig. 4 und 5 näher beschrieben.

Fig. 4 zeigt eine seitliche Schnittansicht der Transportvorrichtung 200 in einem ersten Zustand. Das Unterteil 210 weist einen Permanentmagneten 212 und einen Gleitabschnitt 214 auf. Deren jeweilige Funktion ist identisch zu derjenigen bei der Transportvorrichtung 100 gemäß dem ersten Ausführungsbeispiel und wird deshalb an dieser Stelle nicht erneut beschrieben.

Das Unterteil 210 weist ferner eine Vertiefung 216 auf, welche komplementär zu einer Unterseite eines aufzunehmenden, nicht dargestellten Probenröhrchens ausgebildet ist.

Das Oberteil 220 weist einen Ring 222 auf, welcher in dem Unterteil 210 eingehakt ist. Dies bedeutet, dass der Ring 222 so lange in seiner gezeigten Stellung bezüglich des Unterteils 210 verbleibt, bis er an seiner Unterseite radial nach innen gedrückt wird. In diesem Fall löst sich eine formschlüssige Verbindung und das Oberteil 220 kann nach oben von dem Unterteil 210 entfernt werden. Dies kann auch als Rastverbindung bezeichnet werden.

Oberhalb des Rings 222 weist das Oberteil 220 die Spannzange 224 auf. Die Spannzange 224 weist insgesamt sechs Spannelemente 226 auf, welche bereits in Fig. 3 dargestellt sind. In dem in Fig. 4 gezeigten Zustand ragen die Spannelemente 226 radial nach außen, so dass ein Abstand zwischen jeweiligen gegenüberliegenden Spannelementen größer ist als ein maximaler Durchmesser der Vertiefung 216. Dieser Zustand kann insbesondere dazu verwendet werden, ein Probenröhrchen 10 in die Transportvorrichtung 200 einzuführen bzw. aus diesem zu entnehmen.

Die Hülse 230 befindet sich in dem in Fig. 4 gezeigten Zustand im Wesentlichen unterhalb der Spannzange 224. Dies entspricht einer unteren Position. Zwischen dem Unterteil 210 und der Hülse 230 befindet sich die Feder 235, welche vorliegend als Spiralfeder ausgeführt ist. Sie drückt die Hülse 230 vom Unterteil 210 weg nach oben. Dies bedeutet, dass der in Fig. 4 gezeigte Zustand nur dadurch eingenommen werden kann, dass die Hülse 230 durch eine in Fig. 4 nicht dargestellte Vorrichtung oder auch manuell gegen die Kraft der Feder 235 nach unten gedrückt wird. Eine solche Kraft kann beispielsweise durch eine Vorrichtung ausgeübt werden, welche dafür vorgesehen ist, den in Fig. 4 dargestellten Zustand zu erzeugen. In diesem Zustand ist ein Beladen und Entladen besonders leicht möglich.

Das Unterteil 210 und seine Vertiefung 216 bildet eine Aufnahmeeinheit 204. Das Oberteil 220 und seine Spannzange 224 bildet eine Halteeinheit 202. Zusammen wirken die Halteeinheit 202 und die Aufnahmeeinheit 204 als Halterung für ein Probenröhrchen 10, wie nachfolgend mit Bezug auf Fig. 5 dargestellt wird.

In dem in Fig. 5 dargestellten Zustand befindet sich die Hülse 230 in ihrer oberen Position. Somit drückt die Hülse 230 die Spannelemente 226 radial nach innen auf das Probenröhrchen 10 zu, welches nunmehr in der Transportvorrichtung 200 fest aufgenommen ist. Die Feder 235 sorgt dafür, dass sich die Hülse 230 in ihrer oberen Position befindet, sofern keine nach unten gerichtete Kraft auf die Hülse 230 wirkt. Dies ist beispielsweise während normaler Transportvorgänge oder Aufbewahrungszeiten der Fall.

Das Probenröhrchen 10 liegt nun in der Mulde bzw. dem Konus 216 und wird dadurch sowohl nach unten abgestützt wie auch radial stabilisiert. Weiter oberhalb wirkt auch die Spannzange 224 mit ihren Spannelementen 226 radial fixierend, so dass das Probenröhrchen 10 nicht kippen kann.

Die gezeigten Ausführungsbeispiele von Transportvorrichtungen können mit einem Probenverteilungssystem verwendet werden, wie es in der WO 2013/064656 A1 beschrieben ist. Die Transportvorrichtungen bilden hierbei die Probenträger. Die Transportvorrichtungen, das Probenverteilungssystem und eine Anzahl von präanalytischen, analytischen und /oder postanalytischen Stationen können ein Laborautomatisierungssystem bilden.

## Patentansprüche

1. Transportvorrichtung (200) zur Aufnahme und Fixierung eines Probenbehälters (10) und zum Transportieren des Probenbehälters (10) zwischen präanalytischen, analytischen und/oder postanalytischen Stationen eines Laborautomatisierungssystems, aufweisend:
- mindestens ein magnetisch wirksames Element (212), das dazu ausgebildet ist, mit einem mittels mindestens eines elektromagnetischen Aktuators erzeugten Magnetfeld derart wechselzuwirken, dass eine Antriebskraft auf die Transportvorrichtung (200) bewirkt wird,
- eine Halteeinheit (202) mit einem Durchsteckbereich, durch den der Probenbehälter (10) in Längsrichtung durchsteckbar ist, wobei die Halteeinheit (202) derart ausgebildet ist, dass der Probenbehälter (10) in durchgestecktem Zustand im Bereich der Halteeinheit (202) radial fixiert ist, und
- eine von der Halteeinheit (202) beabstandete Aufnahmeeinheit (204), die dazu ausgebildet ist, ein unteres Ende eines durchgesteckten Probenbehälters (10) aufzunehmen und das untere Ende radial zu fixieren,
**dadurch gekennzeichnet, dass**
- die Halteeinheit (202) als Spannzange (224) ausgebildet ist,
- wobei die Spannzange (224) eine Anzahl von kreisförmig angeordneten Spannelementen (226) aufweist, wobei radial außerhalb der Spannelemente (226) eine vertikal zwischen einer oberen Position und einer unteren Position verschiebbare Hülse (230) angeordnet ist, wobei die Hülse die Spannelemente (226) radial einwärts drückt, wenn sie sich in der oberen Position befindet, und
- wobei unterhalb der Hülse (230) eine Feder (235) angeordnet ist, welche die Hülse (230) auf die obere Position zu vorspannt.

2. Transportvorrichtung (200) nach Anspruch 1, **dadurch gekennzeichnet, dass**
- die Aufnahmeeinheit (204) eine konusförmige Vertiefung (216) zur Aufnahme eines unteren Endes des Probenbehälters (10) aufweist.

3. Transportvorrichtung (200) nach einem der vorhergehenden Ansprüche, **gekennzeichnet durch**,
- einen Gleitabschnitt (214) mit kreisförmigem Querschnitt, auf dem die Transportvorrichtung (200) bei Vorhandensein der magnetischen Antriebskraft über die Transportfläche gleitet.

4. Transportvorrichtung (200) nach einem der vorhergehenden Ansprüche, **gekennzeichnet durch**
- ein Unterteil (210) und
- ein Oberteil (220), wobei die Aufnahmeeinheit (204) an dem Unterteil (210) ausgebildet ist und die Halteeinheit (202) an dem Oberteil (220) ausgebildet ist und das Unterteil (210) und das Oberteil (220) voneinander lösbar sind.

5. Transportvorrichtung (200) nach einem der vorhergehenden Ansprüche, **dadurch gekennzeichnet, dass**
- die Halteeinheit (202) und die Aufnahmeeinheit (204) derart zueinander beabstandet sind, dass eine maximale Durchstecktiefe zwei Zentimeter beträgt.

6. Probenverteilungssystem, aufweisend:
- eine Anzahl von Transportvorrichtungen (200) nach einem der vorhergehenden Ansprüche,
- eine Transportfläche, die dazu ausgebildet ist, die Transportvorrichtungen (200) zu tragen,
- eine Anzahl von elektromagnetischen Aktuatoren, die stationär unter der Transportfläche angeordnet sind, wobei die elektromagnetischen Aktuatoren dazu ausgebildet sind, eine Transportvorrichtung (200), die auf der Transportfläche angeordnet ist, durch Ausüben einer magnetischen Kraft auf die Transportvorrichtung zu bewegen, und
- eine Steuerungseinrichtung, die dazu ausgebildet ist, die elektromagnetischen Aktuatoren derart anzusteuern, dass sich eine jeweilige Transportvorrichtung auf der Transportfläche entlang einer vorgebbaren Bewegungsbahn bewegt.

7. Laborautomatisierungssystem, aufweisend:
- eine Anzahl von präanalytischen, analytischen und/oder postanalytischen Stationen, die dazu ausgebildet sind, Probenbehälter und/oder Proben, die in den Probenbehältern enthalten sind, zu bearbeiten, und
- ein Probenverteilungssystem zum Transportieren der Probenbehälter zwischen den präanalytischen, analytischen und/oder postanalytischen Stationen nach Anspruch 6.

## Claims

1. Transport device (200) for receiving and fixing a sample container (10) and for transporting the sample container (10) between pre-analytical, analytical and/or post-analytical stations of a laboratory automation system, comprising:
- at least one magnetically active element (212) being adapted to interact with a magnetic field generated by means of at least one electromagnetic actuator such that a driving force is caused to the transport device (200),
- a holding unit (202) having a push-through region through which the sample container (10) can be pushed in the longitudinal direction, wherein the holding unit (202) is embodied such that the sample container (10), in the pushed-through state, is fixed radially in the region of the holding unit (202), and
- a receiving unit (204) being spaced from the holding unit (202) and being adapted to receive a bottom end of a pushed-through sample container (10) and being adapted to fix the bottom end in a radial manner,
**characterized in that**
- the holding unit (202) is embodied as a collet (224),
- wherein the collet (224) comprises a number of clamping elements (226) being arranged in a circular manner, wherein a sleeve (230) being displaceable vertically between a top position and a bottom position is arranged radially outside of the clamping elements (226), wherein the sleeve presses the clamping elements (226) radially inward when it is situated in the top position, and
- wherein a spring (235) tensioning the sleeve (230) towards the top position is arranged below the sleeve (230).

2. Transport device (200) according to claim 1, **characterized in that**
- the receiving unit (204) comprises a conical indentation (216) for receiving a bottom end of the sample container (10).

3. Transport device (200) according to any of the preceding claims, **characterized by**
- a sliding portion (214) having a circular cross section, along which the transport device (200) slides over the transport surface when the magnetic driving force is present.

4. Transport device (200) according to any of the preceding claims, **characterized by**
- a bottom part (210) and
- a top part (220), wherein the receiving unit (204) is realized on the bottom part (210) and the holding unit (202) is realized on the top part (220) and the bottom part (210) and the top part (220) are releasable from one another.

5. Transport device (200) according to any of the preceding claims, **characterized in that**
- the holding unit (202) and the receiving unit (204) are spaced apart from one another in such a manner that a maximum insertion depth is two centimetres.

6. Sample distribution system, comprising:
- a number of transport devices (200) according to any of the preceding claims,
- a transport surface being adapted to carry the transport devices (200),
- a number of electromagnetic actuators being arranged in a stationary manner under the transport surface, wherein the electromagnetic actuators are adapted to move a transport device (200) being arranged on the transport surface as a result of exerting a magnetic force onto the transport device, and
- a control device being adapted to actuate the electromagnetic actuators such that a respective transport device moves along a pre-definable movement path on the transport surface.

7. Laboratory automation system, comprising:
- a number of pre-analytical, analytical and/or post-analytical stations being adapted to process sample containers and/or samples being contained in the sample containers, and
- a sample distribution system for transporting the sample containers between the pre-analytical, analytical and/or post-analytical stations according to claim 6.

## Revendications

1. Dispositif de transport (200) destiné à recevoir et à fixer un récipient d'échantillons (10) et à transporter le récipient d'échantillons (10) entre des postes de pré-analyse, d'analyse et/ou de post-analyse d'un système d'automatisation de laboratoire, comportant :
- au moins un élément (212) à effet magnétique, qui est conçu pour interagir avec un champ magnétique généré par le biais d'au moins un actionneur électromagnétique, de sorte qu'une force d'entraînement soit exercée sur le dispositif de transport (200),
- une unité de retenue (202) dotée d'une zone d'enfichage à travers laquelle le récipient d'échantillons (10) peut être enfiché dans la direction longitudinale, l'unité de retenue (202) étant réalisée de telle sorte que le récipient d'échantillons (10) est, à l'état enfiché, fixé radialement dans la région de l'unité de retenue (202), et
- une unité de réception (204) espacée de l'unité de retenue (202), laquelle unité de réception est conçue pour recevoir une extrémité inférieure d'un récipient d'échantillons (10) enfiché et fixer radialement l'extrémité inférieure,
**caractérisé en ce que**
- l'unité de retenue (202) est réalisée sous forme de pince de serrage (224),
- la pince de serrage (224) comprenant un nombre d'éléments de serrage (226) disposés de manière circulaire, une douille (230) déplaçable verticalement entre une position supérieure et une position inférieure étant disposée radialement à l'extérieur des éléments de serrage (226), la douille poussant les éléments de serrage (226) radialement vers l'intérieur lorsqu'elle se trouve dans la position supérieure, et
- un ressort (235) étant disposé en dessous de la douille (230), lequel précontraint la douille (230) vers la position supérieure.

2. Dispositif de transport (200) selon la revendication 1, **caractérisé en ce que**
- l'unité de réception (204) comprend un évidement conique (216) destiné à recevoir une extrémité inférieure du récipient d'échantillons (10).

3. Dispositif de transport (200) selon l'une des revendications précédentes, **caractérisé par**
- une partie de glissement (214) présentant une section transversale circulaire sur laquelle le dispositif de transport (200) glisse sur la surface de transport en présence de la force d'entraînement magnétique.

4. Dispositif de transport (200) selon l'une des revendications précédentes, **caractérisé par**
- une partie inférieure (210) et
- une partie supérieure (220), l'unité de réception (204) étant réalisée sur la partie inférieure (210) et l'unité de retenue (202) étant réalisée sur la partie supérieure (220) et la partie inférieure (210) et la partie supérieure (220) pouvant être détachées l'une de l'autre.

5. Dispositif de transport (200) selon l'une des revendications précédentes, **caractérisé en ce que**
- l'unité de retenue (202) et l'unité de réception (204) sont espacées l'une de l'autre de telle sorte qu'une profondeur d'enfichage maximale est de deux centimètres.

6. Système de distribution d'échantillons, comportant :
- un nombre de dispositifs de transport (200) selon l'une des revendications précédentes,
- une surface de transport qui est conçue pour porter les dispositifs de transport (200),
- un nombre d'actionneurs électromagnétiques qui sont disposés de manière stationnaire sous la surface de transport, les actionneurs électromagnétiques étant conçus pour déplacer un dispositif de transport (200) qui est disposé sur la surface de transport par application d'une force magnétique sur le dispositif de transport et
- un système de commande qui est conçu pour commander les actionneurs électromagnétiques de telle sorte qu'un dispositif de transport respectif se déplace sur la surface de transport le long d'une trajectoire prédéfinissable.

7. Système d'automatisation de laboratoire, comportant :
- un nombre de postes de pré-analyse, d'analyse et/ou de post-analyse qui sont conçus pour traiter des récipients d'échantillons et/ou des échantillons qui sont contenus dans les récipients d'échantillons et
- un système de distribution d'échantillons destiné à transporter les récipients d'échantillons entre les postes de pré-analyse, d'analyse et/ou de post-analyse selon la revendication 6.
